# EUROPÄISCHE PATENTSCHRIFT

(11) **EP 1 804 955 B1**
(45) Veröffentlichungstag und Bekanntmachung des Hinweises auf die Patenterteilung: **26.01.2011**
(21) Anmeldenummer: 05772599.6
(22) Anmeldetag: 03.08.2005
(51) Int. Cl.: B01D 46/24

(54) **PARTIKELFILTER**
PARTICULATE FILTER
FILTRE A PARTICULES

(30) Priorität: 04.08.2004 DE 102004037705; 15.12.2004 DE 102004060307
(43) Veröffentlichungstag der Anmeldung: 11.07.2007
(73) Patentinhaber: Daimler AG, 70327 Stuttgart (DE)
(72) Erfinder: HÜTHWOHL, Georg, 59494 Soest (DE); SCHUMACHER, Uwe, 59494 Soest (DE); FELDER, Hubert, 59439 Holzwickede (DE)
(74) Vertreter: JENSEN & SON
(86) Internationale Anmeldenummer: PCT/EP2005/008397
(87) Internationale Veröffentlichungsnummer: WO 2006/015777

(56) Entgegenhaltungen:
- EP-A- 1 254 689
- WO-A-02/102494
- DE-A1- 10 301 034
- US-A- 4 710 297

## Beschreibung

Die Erfindung betrifft einen Partikelfilter zum Abscheiden von Partikeln aus einem Abgasstrom einer Brennkraftmaschine nach der im Oberbegriff von Anspruch 1 näher definierten Art.

Aus der DE 42 34 930 A1 ist ein Filter zum Abscheiden von Verunreinigungen aus Abgasen bekannt, der einen Filterkörper mit einer Vielzahl von aus gesintertem Metallpulver bestehenden Filterplatten aufweist, die so angeordnet sind, dass sie eine Vielzahl von nebeneinander liegenden Strömungskanälen bilden. Die einzelnen Filterplatten sind wellenförmig geprägt und werden in Längsrichtung bzw. in axialer Richtung durchströmt. Allerdings ergeben sich durch die Wellenform der Filterplatten jeweils gegeneinander abgegrenzte Längskanäle, die sich sehr schnell mit Asche verstopfen und somit die Wirkung des Filters beeinträchtigen können. Ein weiteres Problem dieser Partikelfilter ist die aufwändige axiale Abdichtung durch das seitliche Verspannen der einzelnen Filtertaschen und die Tatsache, dass der Filterkörper nur von einer Seite angeströmt werden kann, was zu höheren Abgasgegendrücken führt.

Einen ähnlichen Partikelfilter beschreibt die DE 102 19 415 A1. Allerdings sind die einzelnen Filterplatten bei dieser Lösung V-förmig zueinander angeordnet, so dass Filtertaschen bzw. Ein- und Ausströmkanäle entstehen, die sich keilförmig verjüngen. Auch hier ergibt sich bei der Verbindung der einzelnen Filtertaschen und der hierzu erforderlichen Abdichtung ein Problem, das nur mittels konstruktiv aufwändiger Lösungen beseitigt werden kann.

Eine Filteranordnung, bei der die oben beschriebenen Dichtungsprobleme nicht auftreten, ist aus der DE 100 35 544 A1 bekannt. Dabei kann das Abgas von allen Seiten flächig anströmen und den Filter durch eine zentrale Ausströmbohrung verlassen. Hierbei ist jedoch wiederum problematisch, dass ein Teil der Filterfläche zum Erzeugen der zentralen Ausströmbohrung ausgestanzt werden muss, was zum einen zu einem erhöhten Fertigungsaufwand und zum anderen zum Entstehen von Verschnitt und somit einer verkleinerten Filterfläche führt. Ein weiterer Nachteil dieser Filteranordnung besteht darin, dass durch die zentrale Ausströmbohrung zwangsläufig ein mehrfaches Umlenken des Abgasstroms erforderlich ist, was zu einer Erhöhung des Abgasgegendrucks führt. Eine Verringerung des Abgasgegendrucks kann bei einer solchen Lösung nur durch eine Vergrößerung des gesamten Partikelfilters erreicht werden, was jedoch häufig Bauraumprobleme mit sich bringt. Des weiteren wurde bei solchen Filteranordnungen bereits eine Ansammlung von Ruß um die zentrale Ausströmbohrung beobachtet, was bei der Regeneration des Partikelfilters zu teilweise starken exothermen Reaktionen führen kann.

Des Weiteren ist aus der WO 02/102494 A1 ein Partikelfilter bekannt, der aus einzelnen, sternförmig um den Umfang einer zentralen Bohrung angeordneten Filtertaschen besteht. Diese Filtertaschen werden umströmt und sind in der Lage, eine verhältnismäßig große Aschenmenge zu speichern. Allerdings lässt diese bekannte Filtergeometrie nur den Aufbau von Filtern mit relativ geringen Durchmessern zu, da aufgrund des sternförmigen Aufbaus in ein vorgegebenes Volumen keine ausreichend große Filterfläche integriert werden kann.

EP 1 254 689 A1 und US 4 710 297 A offenbaren Partikelfilter zur Luftfilterung, bei welchen der Filterkörper aus gefaltetem Filtermaterial derart gebildet ist, dass sich parallel angeordnete Filterplatten ergeben, die Einströmkanäle und Ausströmkanäle voneinander abgrenzen. Eine Abdichtung gegenüber einem den Filterkörper aufnehmenden Gehäuse erfolgt jeweils durch ein gummiähnliches Dichtelement.

Es ist Aufgabe der vorliegenden Erfindung, einen Partikelfilter zur Abscheidung von Partikeln aus dem Abgasstrom einer Brennkraftmaschine zu schaffen, bei dem eine einfache und sichere Abdichtung insbesondere im Ausströmbereich desselben gegeben ist.

Erfindungsgemäß wird diese Aufgabe durch die in Anspruch 1 genannten Merkmale gelöst.

Das erfindungsgemäße Dichtelement dient zur Abdichtung des Filterkörpers gegenüber dem Gehäuse in dem Ausströmbereich des Partikeifilters und bildet damit eine mit geringem konstruktivem Aufwand darzustellende Trennung zwischen der Rohgas- und der Reingasseite des Partikelfilters, wobei eine sichere Abdichtung des Filterkörpers gewährleistet ist.

Erfindungsgemäß ist das Dichtelement in Form eines Kamms ausgebildet, dessen Zinken in seitliche Öffnungen der Einströmkanäle eingreifen und auf diese Weise für eine Abdichtung der Einströmkanäle gegenüber dem Gehäuse sorgen. Besonders vorteilhaft ist hierbei, dass die einzelnen Filterplatten nicht mit Ausklinkungen versehen werden müssen, sondern dass lediglich das sehr viel einfacher zu bearbeitende Dichtungselement an die Form der Filterplatten angepasst wird. Auf diese Weise ist eine kostengünstige und in hohem Maße prozesssichere Fertigung des erfindungsgemäßen Partikelfilters möglich, wobei sich gleichzeitig eine Versteifung des gesamten Filterkörpers ergibt, da dieser durch das Dichtelement nicht nur abgedichtet, sondern auch sicher mit dem Gehäuse verbunden wird. Des weiteren sorgen die erfindungsgemäßen Zinken des in Form eines Kamms ausgebildeten Dichtelements für eine erheblich verbesserte Wärmeabfuhr, was insbesondere dann vorteilhaft ist, wenn das Dichtelement mit den Filterplatten verschweißt werden soll, so dass vorteilhafterweise eine Beschädigung der Filterplatten verhindert wird.

Durch die Ein- und Ausströmkanäle, die im wesentlichen parallel zueinander verlaufen, kann das den Filterkörper des erfindungsgemäßen Partikelfilters anströmende Abgas im wesentlichen ohne Umlenkung in axialer Richtung durch den Filterkörper strömen, so dass sich ein sehr geringer Abgasgegendruck ergibt. Dies wird dadurch begünstigt, dass das Abgas an wenigstens zwei Seiten in den Filterkörper einströmen kann und so die Verarbeitung einer größeren Abgasmenge in derselben Zeit möglich ist. Durch die gleichmäßige Durchströmung des Filterkörpers lagert sich der Ruß vorteilhafterweise erheblich gleichmäßiger innerhalb desselben ab, was zu einer besseren Ausnutzung der volumenmäßigen Kapazität des Filterkörpers führt.

In diesem Zusammenhang ist außerdem vorteilhaft, dass bei der Herstellung der Filterplatten für den erfindungsgemäßen Partikelfilter aufgrund des Verzichts auf eine zentrale Ausströmbohrung kein Verschnitt anfällt und dass die einzelnen Filterplatten annähernd beliebig groß ausgeführt werden können, was zu einem größeren Speichervermögen für Ruß und Asche führt. Des weiteren bietet die erfindungsgemäße Lösung gegenüber bekannten Partikelfiltern bei gleichem Bauraum ein größeres Aufnahmevolumen für Rußpartikel und Asche.

Um die Anströmfläche des Filterkörpers zu erhöhen und somit den von dem erfindungsgemäßen Partikelfilter erzeugten Abgasgegendruck noch weiter zu verringern, kann in einer vorteilhaften Weiterbildung der Erfindung vorgesehen sein, dass die Einströmkanäle an ihren beiden seitlichen Bereichen derart geöffnet sind, dass sich der Einströmbereich über drei Seiten des Filterkörpers erstreckt.

Wenn in einer weiteren vorteilhaften Ausgestaltung der Erfindung vorgesehen ist, dass das Dichtelement mittels eines zusätzlichen Spannelements mit dem Filterkörper verbunden ist, so wird eine noch bessere Anbringung des Dichtelements an dem Filterkörper erreicht und es ist außerdem eine noch bessere Wärmeabfuhr bei einem eventuellen Schweißvorgang gegeben. Dies vereinfacht vorteilhafterweise die Fertigung des erfindungsgemäßen Partikelfilters.

Weitere vorteilhafte Ausgestaltungen und Weiterbildungen der Erfindung ergeben sich aus den restlichen Unteransprüchen.

Nachfolgend ist ein Ausführungsbeispiel der Erfindung anhand der Zeichnung prinzipmäßig dargestellt.

Dabei zeigen:
- Fig. 1: einen Schnitt durch einen erfindungsgemäßen Parti- kelfilter;
- Fig. 2: einen Längsschnitt durch den Partikelfilter nach der Linie II-II aus Fig. 1;
- Fig. 3: eine perspektivische Ansicht der Ausströmkanäle;
- Fig. 4: die Ausströmkanäle gemäß Fig. 3 mit einem den Fil- terkörper gegenüber dem Gehäuse abdichtenden Dicht- element;
- Fig. 5: eine erste Ausführungsform des erfindungsgemäßen Dichtelements zum Abdichten des Filterkörpers gegen- über dem Gehäuse;
- Fig. 6: eine vergrößerte Darstellung des Dichtelements aus Fig. 5;
- Fig. 7: eine Seitenansicht des Dichtelements aus Fig. 5 mit einem zusätzlichen Spannelement;
- Fig. 8: eine zweite Ausführungsform des erfindungsgemäßen Dichtelements zum Abdichten des Filterkörpers gegen- über dem Gehäuse;
- Fig. 9: eine Rückansicht des Dichtelements aus Fig. 8;
- Fig. 10: eine dritte Ausführungsform des erfindungsgemäßen Dichtelements zum Abdichten des Filterkörpers gegen- über dem Gehäuse;
- Fig. 11: das Dichtelement aus Fig. 10 mit zusätzlichen Spann- elementen;
- Fig. 12: eine Draufsicht auf die erste Ausführungsform des Dichtelements;
- Fig. 13: eine vergrößerte perspektivische Darstellung des Dichtelements aus Fig. 12;
- Fig. 14: eine Draufsicht auf die zweite Ausführungsform des Dichtelements;
- Fig. 15: eine vergrößerte perspektivische Darstellung des Dichtelements aus Fig. 14;
- Fig. 16: eine Draufsicht auf die dritte Ausführungsform des Dichtelements; und
- Fig. 17: eine vergrößerte perspektivische Darstellung des Dichtelements aus Fig. 16.

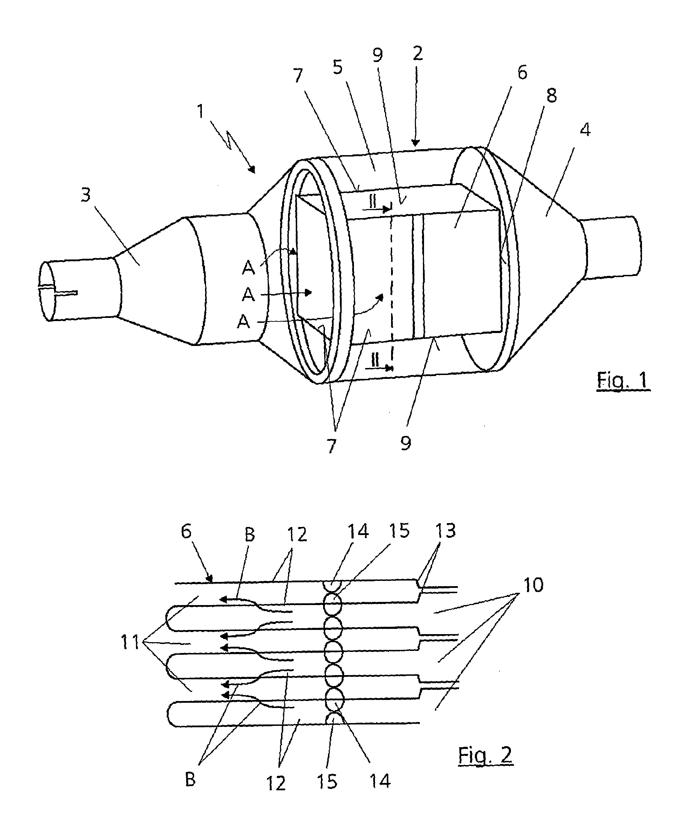

Fig. 1 zeigt einen Partikelfilter 1 zur Abscheidung von Partikeln aus einem Abgasstrom einer nicht dargestellten Brennkraftmaschine, der ein Gehäuse 2 aufweist. Das Gehäuse 2 ist in der dargestellten Ausführungsform über seine gesamte Länge im Querschnitt kreisförmig ausgebildet und weist ein Einströmrohr 3 sowie ein Ausströmrohr 4 auf, die in eine nicht dargestellte Abgasleitung der Brennkraftmaschine integrierbar sind. In einem sich zwischen dem Einströmrohr 3 und dem Ausströmrohr 4 befindlichen Mittelabschnitt 5 des Gehäuses 2 ist ein Filterkörper 6 angeordnet, der einen Einströmbereich 7 und einen Ausströmbereich 8 aufweist. Der Filterkörper 6 ist im wesentlichen quaderförmig ausgeführt und weist an seiner Oberseite und seiner Unterseite jeweilige Abschlussplatten 9 auf. Der Ausströmbereich 8 befindet sich an der dem Ausströmrohr 4 zugewandten Seite des Filterkörpers 6, wohingegen die drei restlichen Seiten des Filterkörpers 6 den Einströmbereich 7 bilden. Wie durch die mit "A" bezeichneten Pfeile dargestellt, ist somit eine Anströmung des Filterkörpers 6 durch den Abgasstrom von drei Seiten möglich.
In dem Schnitt gemäß Fig. 2 ist der Aufbau des Filterkörpers 6 detaillierter dargestellt. Dieser ist durch abwechselnd zueinander angeordnete Einströmkanäle 10 und Ausströmkanäle 11 gebildet. Hierbei sind die Einströmkanäle 10 zu dem Einströmbereich 7 hin geöffnet und zu dem Ausströmbereich 8 hin geschlossen, wohingegen die Ausströmkanäle 11 zu dem Ausströmbereich 8 hin geöffnet und zu dem Einströmbereich 7 hin geschlossen sind. Die Einströmkanäle 10 und die Ausströmkanäle 11 werden jeweils durch zwei benachbart zueinander angeordnete Filterplatten 12 gebildet, die vorzugsweise aus einem mit einem Sintermetallpulver beschichteten, gasdurchlässigen Trägermaterial bestehen. Aufgrund des Abgasdrucks strömen die Abgase aus den Einströmkanälen 10 gemäß den Pfeilen "B" durch die Filterplatten 12 in die Ausströmkanäle 11. Bei diesem Durchströmen werden die in dem Abgasstrom enthaltenen Partikel, die insbesondere in Form von Ruß vorliegen, in an sich bekannter Weise an den Filterplatten 12 abgeschieden.

Das Verschließen der Ausströmkanäle 11 im Einströmbereich 7 wird im vorliegenden Fall so gelöst, dass jeweils die beiden die Ausströmkanäle 11 bildenden Filterplatten 12 im Einströmbereich 7 mit jeweiligen Abkantungen 13 in Richtung derjenigen benachbarten Filterplatte 12 versehen sind, mit der sie den Ausströmkanal 11 bilden. Diese beiden Abkantungen 13 berühren dann einander und werden vorzugsweise durch Verschweißen miteinander verbunden. Hierzu kann beispielsweise ein an sich bekanntes WIG-Schweißverfahren eingesetzt werden. Alternativ könnte auch ein Löt- oder ein Klebeverfahren eingesetzt werden, falls hierdurch die notwendige Festigkeit erreicht werden kann.
In gleicher Weise wäre es auch möglich, die Einströmkanäle 10 in dem Ausströmbereich 8 abzukanten und miteinander zu verschweißen, um sie zu verschließen. Im vorliegenden Fall wird dies jedoch durch Biegen einer den gesamten Einströmkanal 10 bildenden Filterplatte 12 realisiert, wodurch die einzelne Filterplatte 12 zwar eine größere Länge aufweist, dafür jedoch ein erheblicher Arbeitsumfang eingespart werden kann.

In Fig. 2 ist des weiteren zu erkennen, dass die parallel zueinander verlaufenden, im wesentlichen ebenen Filterplatten 12 mit beispielsweise noppenförmigen Vertiefungen 14 und Erhebungen 15 in Richtung der benachbarten Filterplatte 12 versehen sind. Dadurch wird verhindert, dass die Filterplatten 12 durch den Druck des Abgasstroms gegeneinander gepresst werden.

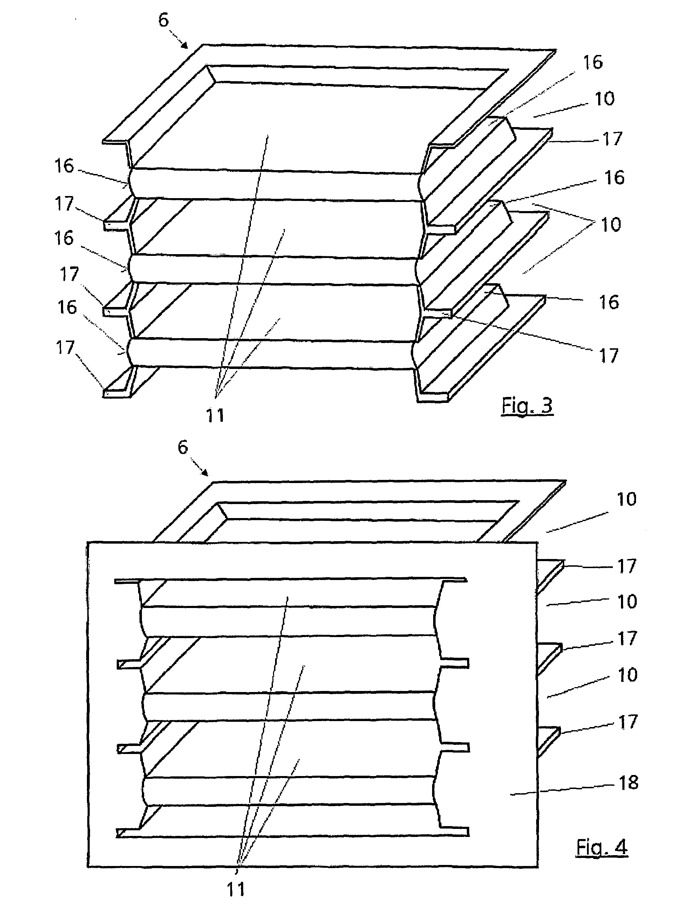

Aus der Darstellung eines Teils des Filterkörpers 6 in Fig. 3 ist erkennbar, dass die Einströmkanäle 10 auch an ihren beiden seitlichen Bereichen 16 geöffnet sind bzw. seitliche Öffnungen 16a aufweisen, so dass sich der Einströmbereich 7, wie oben erwähnt, über drei Seiten des Filterkörpers 6 erstreckt. Alternativ könnte jedoch auch vorgesehen sein, einen der beiden seitlichen Bereiche 16 der Einströmkanäle 10 beispielsweise mittels einer Verschweißung zu verschließen, wodurch sich der Einströmbereich 7 nur über zwei Seiten des Filterkörpers 6 erstrecken würde. Dagegen sind die Ausströmkanäle 11 in ihren beiden seitlichen Bereichen 17 durch Verschweißen der dieselben bildenden Filterplatten 12 geschlossen, um zu verhindern, dass das Abgas den Filterkörper 6 an einem anderen Bereich als dem Ausströmbereich 8 verlassen kann. Auch hier wäre gegebenenfalls ein geeignetes Löt- oder Klebeverfahren einsetzbar.

Fig. 4 zeigt zusätzlich zu der Darstellung gemäß Fig. 3 ein in der vorliegenden Ausführungsform plattenartiges Dichtelement 18, welches dazu dient, den Filterkörper 6 in dem Ausströmbereich 8 gegenüber dem Gehäuse 2 abzudichten. Das Dichtelement 18 bildet somit die Trennung zwischen der Rohgas- und der Reingasseite des Partikelfilters 1. Vorzugsweise ist der Filterkörper 6 mit dem Dichtelement 18 durch Schweißen verbunden. Die Verbindung des Dichtelements 18 mit dem Gehäuse 2 kann ebenfalls durch Schweißen erfolgen.

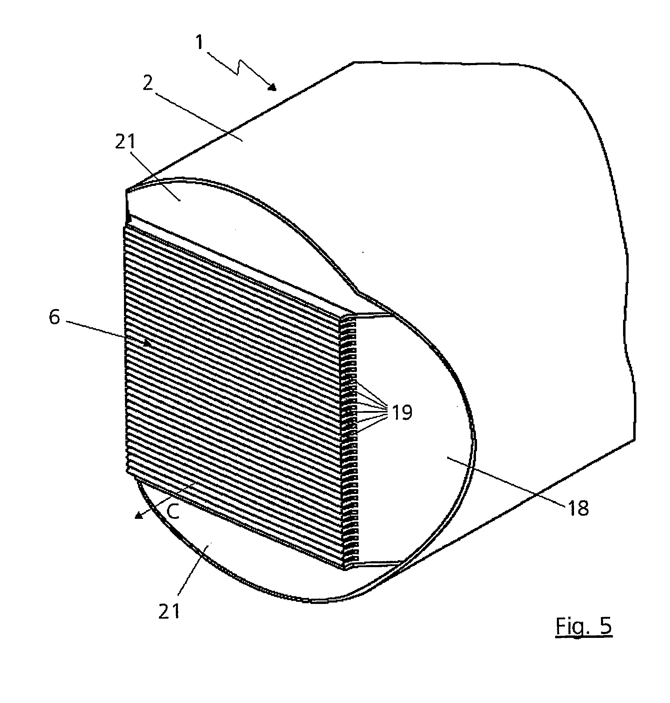

In Fig. 5 ist ein Dichtelement 18 dargestellt, welches dazu dient, den Filterkörper 6 in seinem Ausströmbereich 8 gegenüber dem Gehäuse 2 abzudichten. Auf diese Weise bildet das Dichtelement 18 die Trennung zwischen der Rohgas- und der Reingasseite des Partikelfilters 1. Das Dichtelement 18 ist in der Form eines Kamms ausgebildet und weist eine Vielzahl von Zinken 19 auf, zwischen denen sich jeweilige Aussparungen 20 befinden. Im vorliegenden Fall befindet sich auf beiden Seiten des Filterkörpers 6 jeweils eines der Dichtelemente 18. In Fig. 5 ist des weiteren zu erkennen, dass zur Abdichtung des Gehäuses 2 gegenüber dem Filterkörper 6 zusätzlich zu dem Dichtelement 18 noch zwei Abdeckbleche 21 vorgesehen sind, die für die Abdichtung des Bereichs oberhalb und unterhalb des Filterkörpers 6 sorgen. Die Abdeckbleche 21 können durch Verschweißen oder ein anderes geeignetes Verfahren mit dem Filterkörper 6 und/oder dem Gehäuse 2 verbunden sein. Das Dichtelement 18 und die beiden Abdeckbleche 21 sind dabei an die Form der Öffnung des Gehäuses 2 angepasst, wodurch der rechteckige Filterkörper 6 in das runde Gehäuse 2 integriert werden kann.

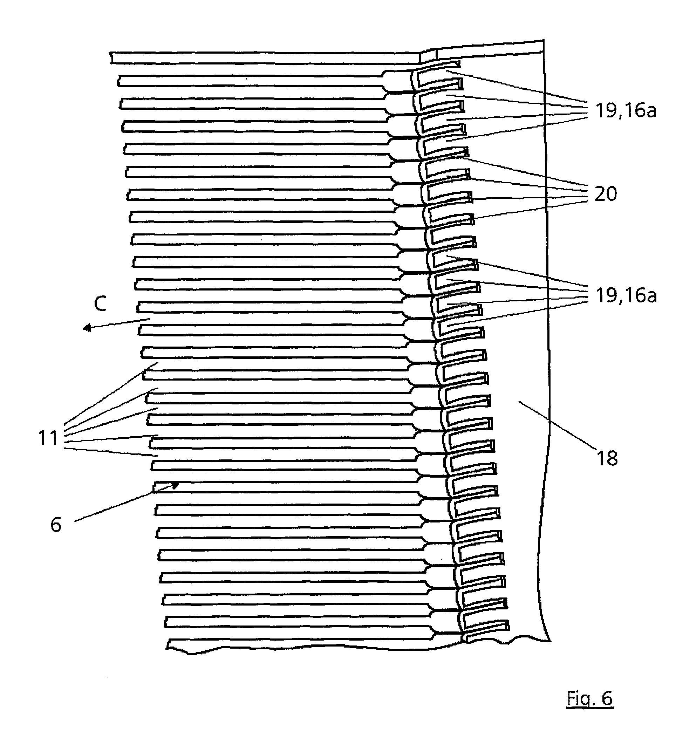

Wie in Fig. 6 deutlicher zu erkennen ist, greifen die Zinken 19 des Dichtelements 18 in die seitlichen Öffnungen 16a der Einströmkanäle 10 ein, um dichtend mit dem Material der Filterplatten 12 abzuschließen. Die Zinken 19 des Dichtelements 18 schließen also die durch die Abkantung der Filterplatten 12 sich ergebende Erweiterung bzw. seitliche Öffnung 16a der seitlichen Bereiche 16 der Einströmkanäle 10. Dadurch ergibt sich, gemeinsam mit der oben erwähnten Verschweißung der seitlichen Bereiche 17 der Ausströmkanäle 11, eine vollständige Abdichtung des Filterkörpers 6.
Aus Fig. 6 geht des weiteren hervor, dass die Zinken 19 des Dichtelements 18 gekrümmt sind und dass sie in demjenigen Bereich, in dem sie in die seitlichen Öffnungen 16a der Einströmkanäle 10 eingreifen, in der mit "C" bezeichneten Strömungsrichtung des Abgasstroms verlaufen.

Vorzugsweise ist das Dichtelement 18 sowohl mit den Filterplatten 12 als auch mit dem Gehäuse 2 durch Verschweißen verbunden, es ist jedoch auch möglich, ein Löt- oder ein Klebeverfahren einzusetzen, falls hierdurch die notwendige Festigkeit der Verbindung zwischen den beteiligten Bauteilen erreicht werden kann.

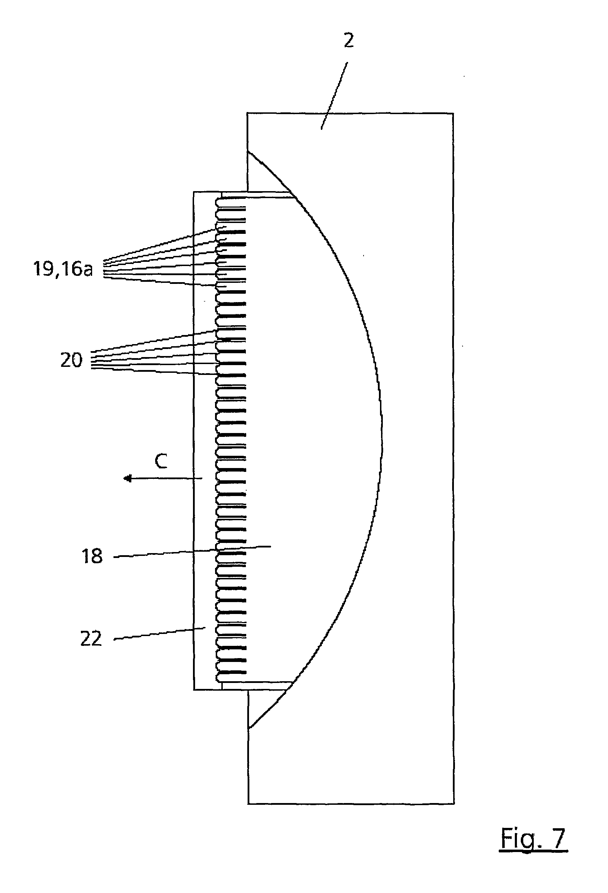

In Fig. 7 ist das Dichtelement 18 in einer Seitenansicht dargestellt. Zusätzlich ist hierbei ein Spannelement 22 vorgesehen, welches in den beiden seitlichen Bereichen mit den Filterplatten 12 verbunden ist und auf dieselben eine zusätzliche Kraft aufbringt, um sie von der Reinluftseite her stärker in Richtung der Zinken 19 des Dichtelements 18 zu pressen. Dadurch wird eine noch bessere Abdichtung des Filterkörpers 6 gegenüber dem Gehäuse 2 erreicht.

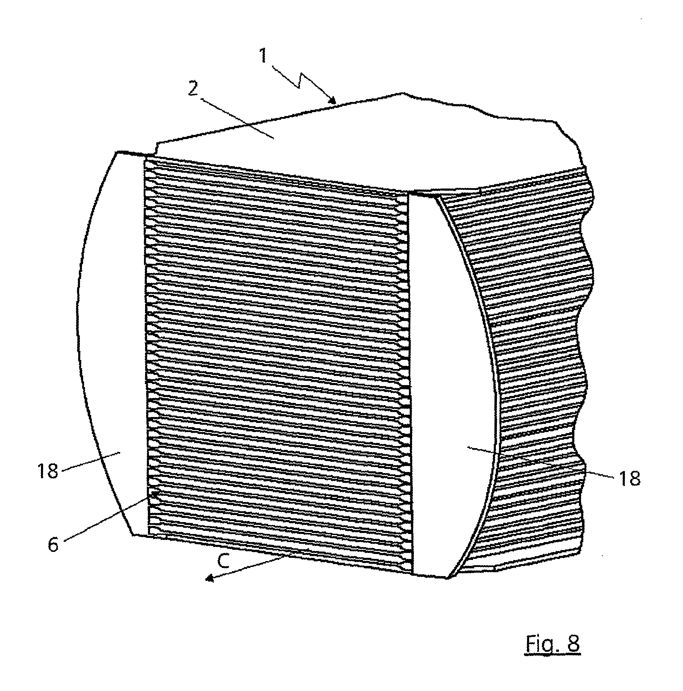

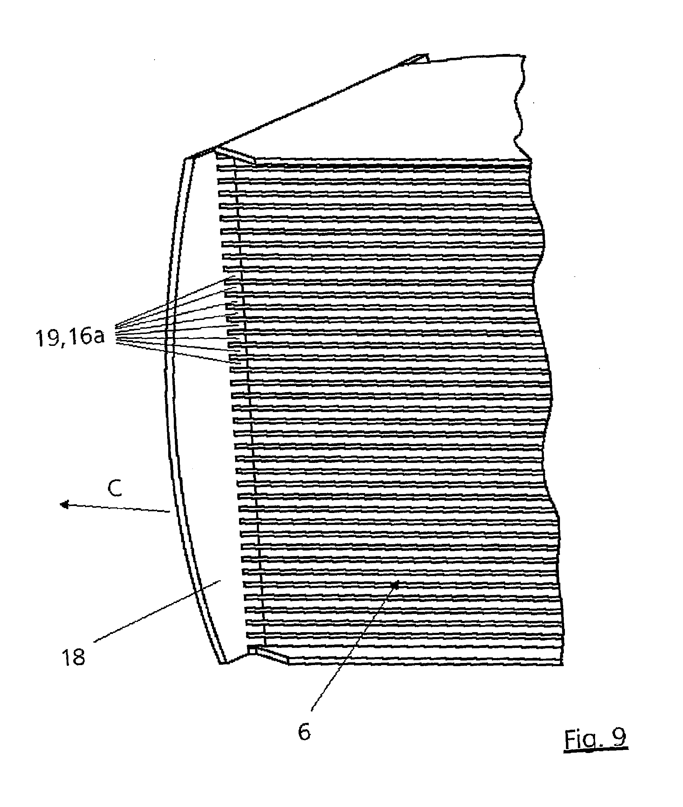

Die Figuren 8 und 9 zeigen eine alternative Ausführungsform des Dichtelements 18. Hierbei erstrecken sich die Zinken 19, wie insbesondere in Fig. 8 zu erkennen ist, in einem Winkel von im wesentlichen 90° von dem Dichtelement 18 weg und verlaufen in dem Bereich, in dem sie in die seitlichen Öffnungen 16a der Einströmkanäle 10 eingreifen, entgegen der Strömungsrichtung "C" des Abgasstroms.

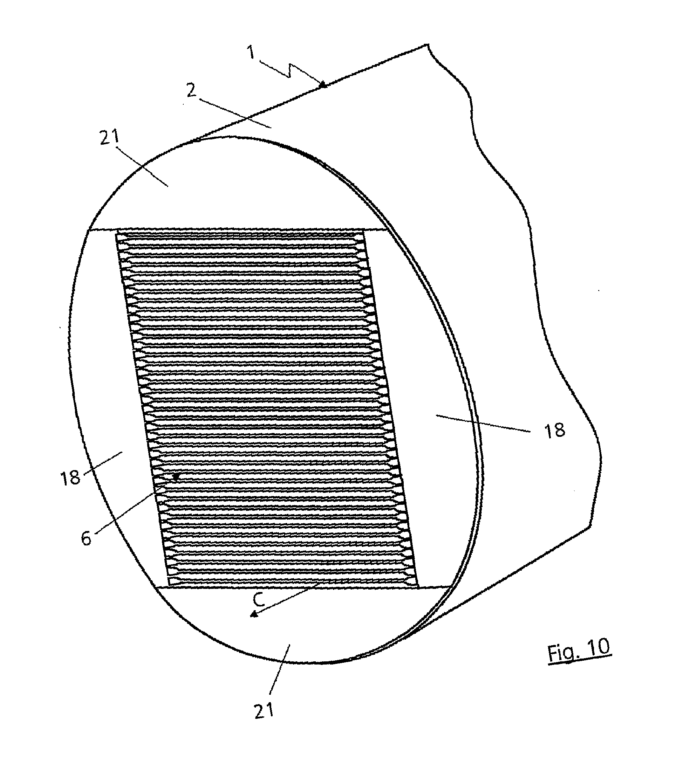

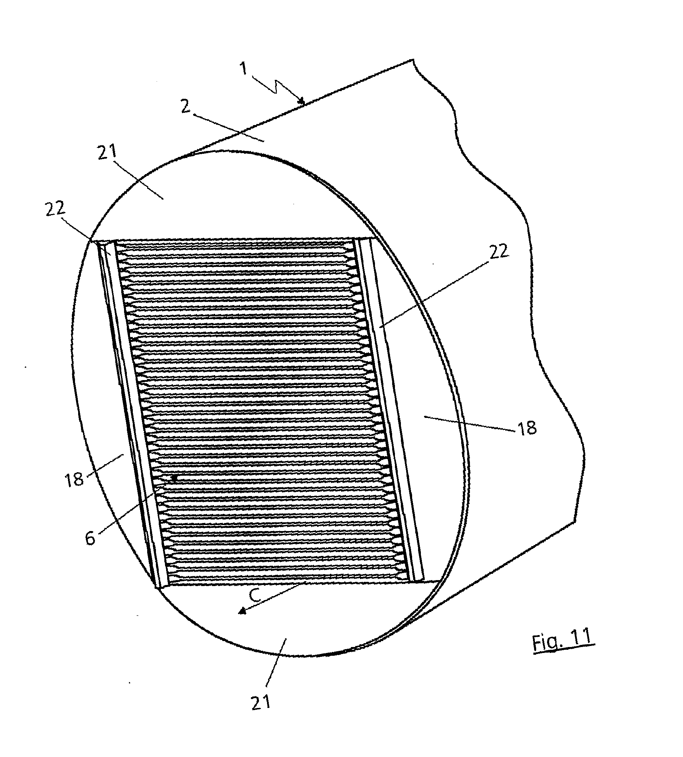

Eine weitere Ausführungsform des Dichtelements 18 ist in den Figuren 10 und 11 dargestellt. Hierbei verlaufen die Zinken 19 im wesentlichen in Richtung der Erstreckung des Dichtelements 18 von dem Gehäuse 2 zu dem Filterkörper 6 und somit quer zur Strömungsrichtung "C" des Abgasstroms. In Fig. 11 ist außerdem erkennbar, dass an beiden Verbindungen der Dichtelemente 18 mit dem Filterkörper 6 eines der Spannelemente 22 angebracht ist. Die beiden Spannelemente 22 sind jeweils nicht nur mit dem Filterkörper 6 und dem Dichtelement 18, sondern auch mit dem Gehäuse 2 verbunden. Die Verbindung des Spannelements 22 mit dem Filterkörper 6, dem Dichtelement 18 und dem Gehäuse 2 erfolgt vorzugsweise durch Verschweißen. Auch hier ist wiederum der Einsatz eines Löt- oder Klebeverfahrens denkbar. Es ist in nicht dargestellter Weise auch möglich, die Spannelemente 22 zur Verbindung der Dichtelemente 18 mit dem Gehäuse 2 einzusetzen, sodass die Dichtelemente 18 nur mittelbar mit dem Gehäuse 2 verbunden sind.

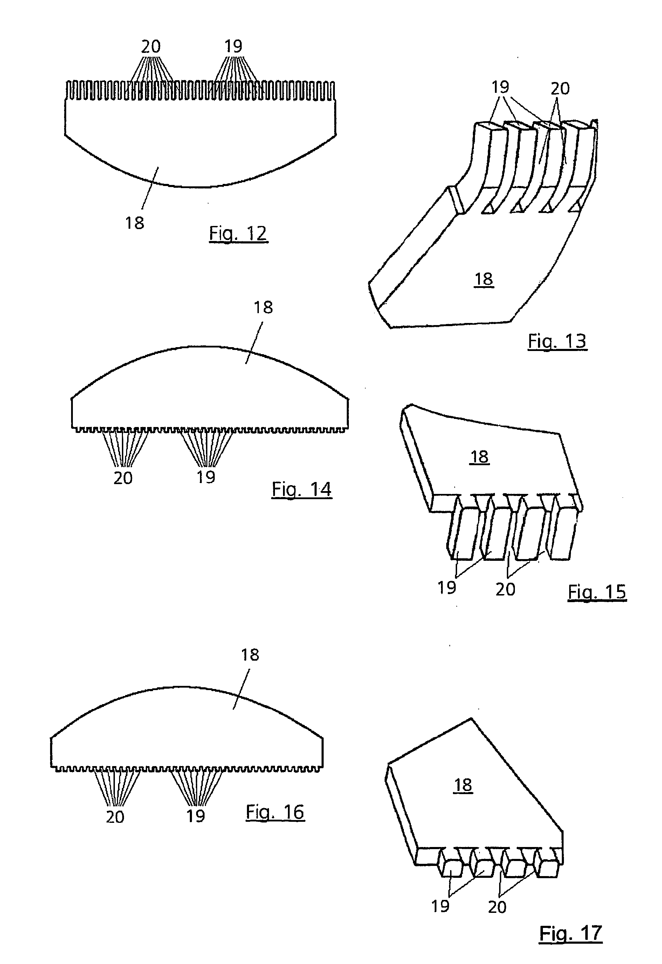

In den Figuren 12 und 13 ist die Form des bei der Ausführungsform des Partikelfilters 1 gemäß der Figuren 5, 6 und 7 verwendeten Dichtelements 18 detaillierter dargestellt. Analog dazu zeigen die Figuren 14 und 15 die Form des Dichtelements 18 gemäß der Ausführungsform des Partikelfilters 1 der Figuren 8 und 9 und die Figuren 16 und 17 zeigen die Form des Dichtelements 18 gemäß der Ausführungsform des Partikelfilters 1 der Figuren 10 und 11.

## Patentansprüche

1. Partikelfilter (1) zur Abscheidung von Partikeln aus einem Abgasstrom einer Brennkraftmaschine, welcher folgende Merkmale aufweist:
- einen Filterkörper (6), der einen Einströmbereich (7) und einen Ausströmbereich (8) aufweist und durch abwechselnd zueinander angeordnete, zu dem Einströmbereich (7) hin geöffnete und zu dem Ausströmbereich (8) hin geschlossene Einströmkanäle (10) und zu dem Ausströmbereich (8) hin geöffnete und zu dem Einströmbereich (7) hin geschlossene Ausströmkanäle (11) gebildet ist,
- der Filterkörper (6) weist mehrere im wesentlichen ebene, parallel zueinander angeordnete Filterplatten (12) auf, wobei die Einströmkanäle (10) und die Ausströmkanäle (11) jeweils durch benachbarte Filterplatten (12) gebildet sind,
- ein Gehäuse (2), in dem der Filterkörper (6) angeordnet ist,
- die Einströmkanäle (10) sind an wenigstens einem ihrer seitlichen Bereiche (16) derart geöffnet, dass sich der Einströmbereich (7) über wenigstens zwei Seiten des Filterkörpers (6) erstreckt,
- wenigstens ein Dichtelement (18), zum Abdichten des Filterkörpers (6) in dem Ausströmbereich (8) gegenüber dem Gehäuse (2),
**dadurch gekennzeichnet, dass**
das Dichtelement (18) in Form eines Kamms ausgebildet ist, der zumindest mittelbar mit dem Gehäuse (2) verbunden ist und dessen Zinken (19) in seitliche Öffnungen (16a) der Einströmkanäle eingreifen.

2. Partikelfilter nach Anspruch 1,
**dadurch gekennzeichnet,**
**dass** die Einströmkanäle (10) an ihren beiden seitlichen Bereichen (16) derart geöffnet sind, dass sich der Einströmbereich (7) über drei Seiten des Filterkörpers (6) erstreckt.

3. Partikelfilter nach Anspruch 1 oder 2,
**dadurch gekennzeichnet,**
**dass** das Dichtelement (18) mittels eines zusätzlichen Spannelements (22) mit dem Filterkörper (6) verbunden ist.

4. Partikelfilter nach Anspruch 3,
**dadurch gekennzeichnet,**
**dass** das Spannelement (22) mit dem Dichtelement (18), dem Filterkörper (6) und dem Gehäuse (2) verbunden ist.

5. Partikelfilter nach einem der Ansprüche 1 bis 4,
**dadurch gekennzeichnet,**
**dass** zusätzlich zu dem Dichtelement (18) wenigstens ein Abdeckblech (21) vorgesehen ist, welches den Filterkörper (6) mit dem Gehäuse (2) verbindet.

6. Partikelfilter nach einem der Ansprüche 1 bis 5,
**dadurch gekennzeichnet,**
**dass** sich die Zinken (19) des als Kamm ausgebildeten Dichtelements (18) gekrümmt sind und sich in dem Bereich, in dem sie in die seitlichen Öffnungen (16a) der Einströmkanäle (10) eingreifen, in Strömungsrichtung des Abgasstroms verlaufen.

7. Partikelfilter nach einem der Ansprüche 1 bis 5,
**dadurch gekennzeichnet,**
**dass** die Zinken (19) sich in einem Winkel von im wesentlichen 90° von dem Dichtelement (18) weg erstrecken und in dem Bereich, in dem sie in die seitlichen Öffnungen (16a) der Einströmkanäle (10) eingreifen, entgegen der Strömungsrichtung des Abgasstroms verlaufen.

8. Partikelfilter nach einem der Ansprüche 1 bis 5,
**dadurch gekennzeichnet,**
**dass** die Zinken (19) im wesentlichen in Richtung der Erstreckung des Dichtelement (18) von dem Gehäuse (2) zu dem Filterkörper (6) verlaufen.

9. Partikelfilter nach einem der Ansprüche 1 bis 8,
**dadurch gekennzeichnet,**
**dass** der Filterkörper (6) mit dem Dichtelement (18) verschweißt ist.

10. Partikelfilter nach einem der Ansprüche 1 bis 9,
**dadurch gekennzeichnet,**
**dass** das Dichtelement (18) mit dem Gehäuse (2) verschweißt ist.

## Claims

1. Particulate filter (1) for separating particulates from an exhaust gas stream, having the following features:
- a filter body (6) having an inflow region (7) and an outflow region (8) and represented by alternately arranged inflow passages (10) which are open towards the inflow region (7) and closed towards the outflow region (8) and outflow passages (11) which are open towards the outflow region (8) and closed towards the inflow region (7),
- the filter body (6) comprises a plurality of substantially flat filter plates (12) arranged parallel to one another, the inflow passages (10) and the outflow passages (11) being formed by adjacent filter plates (10),
- a housing (2) in which the filter body (6) is accommodated,
- the inflow passages (10) are in at least one of their lateral regions (16) open in such a way that the inflow region (7) extends across at least two sides of the filter body (6),
- at least one sealing element (18) for sealing the filter body (6) against the housing (2) in the outflow region (8),
**characterised in that**
the sealing element (18) is designed in the form of a comb which is at least indirectly joined to the housing (2) and the teeth (19) of which engage lateral openings (16a) of the inflow passages.

2. Particulate filter according to claim 1,
**characterised in that**
the inflow passages (10) are opened in their two lateral regions (16) such that the inflow region (7) extends across three sides of the filter body (6).

3. Particulate filter according to claim 1 or 2,
**characterised in that**
the sealing element (18) is joined to the filter body (6) by means of an additional clamping element (22).

4. Particulate filter according to claim 3,
**characterised in that**
the clamping element (22) is joined to the sealing element (18), the filter body (6) and the housing (2).

5. Particulate filter according to any of claims 1 to 4,
**characterised in that**
in addition to the sealing element (18) at least one cover plate (21) is provided which joins the filter body (6) to the housing (2).

6. Particulate filter according to any of claims 1 to 5,
**characterised in that**
the teeth (19) of the sealing element (18) which is designed as a comb are curved and extend in the direction of flow of the exhaust gas stream in the region where they engage the lateral openings (16a) of the inflow passages (10).

7. Particulate filter according to any of claims 1 to 5,
**characterised in that**
the teeth (19) extend away from the sealing element (18) at an angle of substantially 90° and extend against the direction of flow of the exhaust gas stream in the region where they engage the lateral openings (16a) of the inflow passages (10).

8. Particulate filter according to any of claims 1 to 5,
**characterised in that**
the teeth (19) extend substantially in the direction in which the sealing element (18) extends from the housing (2) to the filter body (6).

9. Particulate filter according to any of claims 1 to 8,
**characterised in that**
the filter body (6) is welded to the sealing element (18).

10. Particulate filter according to any of claims 1 to 9,
**characterised in that**
the sealing element (18) is welded to the housing (2).

## Revendications

1. Filtre à particules (1) servant à séparer des particules d'un courant de gaz d'échappement d'un moteur à combustion interne, qui présente les caractéristiques suivantes :
- un corps filtrant (6) qui présente une zone d'admission (7) et une zone d'évacuation (8) et qui est formé par des conduits d'admission (10) ouverts en direction de la zone d'admission (7) et fermés en direction de la zone d'évacuation (8) et alternant avec des conduits d'évacuation (11) ouverts en direction de la zone d'évacuation (8) et fermés en direction de la zone d'admission (7).
- le corps filtrant (6) présente plusieurs plaques filtrantes (12) pratiquement planes, parallèles entre elles, les conduits d'admission (10) et les conduits d'évacuation (11) étant respectivement formés par les plaques filtrantes (12) voisines,
- un boîtier (2) dans lequel est disposé le corps de filtre (6),
- les conduits d'admission (10) sont ouverts sur au moins l'une de leurs zones latérales (16) de telle sorte que la zone d'admission (7) s'étende sur au moins deux côtés du corps filtrant (6),
- au moins un élément d'étanchéité (8) servant à étanchéifier le corps filtrant (6) dans la zone d'évacuation (8) par rapport au boîtier (2),
**caractérisé en ce que** l'élément d'étanchéité (18) est conçu en forme de peigne qui est relié au moins indirectement au boîtier (2) et dont les dents (19) s'introduisent dans les ouvertures (16a) latérales des conduits d'admission.

2. Filtre à particules selon la revendication 1, **caractérisé en ce que** les conduits d'admission (10) sont ouverts sur leurs deux zones latérales (16) de telle sorte que la zone d'admission (7) s'étende sur trois côtés du corps filtrant (6).

3. Filtre à particules selon la revendication 1 ou 2, **caractérisé en ce que** l'élément d'étanchéité (18) est relié au corps filtrant (6) au moyen d'un élément de serrage (22) supplémentaire.

4. Filtre à particules selon la revendication 3, **caractérisé en ce que** l'élément de serrage (22) est relié à l'élément d'étanchéité (18), au corps filtrant (6) et au boîtier (2).

5. Filtre à particules selon l'une quelconque des revendications 1 à 4, **caractérisé en ce qu'**en plus de l'élément d'étanchéité (18) est au moins prévu une tôle de protection (21) qui relie le corps filtrant (6) au boîtier (2).

6. Filtre à particules selon l'une quelconque des revendications 1 à 5, **caractérisé en ce que** les dents (19) de l'élément d'étanchéité (18) conçu comme un peigne sont courbées et s'étendent dans la zone dans laquelle elles s'introduisent dans les ouvertures latérales (16a) des conduits d'admission (10), dans le sens d'écoulement du courant de gaz d'échappement.

7. Filtre à particules selon l'une quelconque des revendications 1 à 5, **caractérisé en ce que** les dents (19) s'éloignent à un angle essentiellement de 90° de l'élément d'étanchéité (18) et dans la zone dans laquelle elles s'introduisent dans les ouvertures latérales (16a) des conduits d'admission (10), dans le sens contraire de l'écoulement du courant de gaz d'échappement.

8. Filtre à particules selon l'une quelconque des revendications 1 à 5, **caractérisé en ce que** les dents (19) s'étendent essentiellement dans le sens de l'étendue de l'élément de serrage (19) à partir du boîtier (2) jusqu'au corps filtrant (6).

9. Filtre à particules selon l'une quelconque des revendications 1 à 8, **caractérisé en ce que** le corps filtrant (6) est soudé à l'élément d'étanchéité (18).

10. Filtre à particules selon l'une quelconque des revendications 1 à 9, **caractérisé en ce que** l'élément d'étanchéité (18) est soudé au boîtier (2).
